# EUROPEAN PATENT APPLICATION

(11) **EP 4 703 196 A1**
(43) Date of publication of application: **04.03.2026**
(21) Application number: 24197003.7
(22) Date of filing: 28.08.2024
(51) Int. Cl.: B60N 2/28

(54) **A CHILD VEHICLE SEAT**

(71) Applicant: Maxi Miliaan B.V., 5704 RD Helmond (NL)
(72) Inventor: Olfers, Dennis, 5595 AV Leende (NL); Toonders, Sander Gerardus, 5554 ET Valkenswaar (NL)
(74) Representative: Veldman-Dijkers, Cornelia G. C.

(57) **Abstract**

A child vehicle seat comprises a seat portion and a backrest portion as well as at least one step shaped element provided with at least a first higher step, a second lower step as well as a transition surface located between the first higher step and the second lower step; at least one abutment element cooperating with the step shaped element, wherein the abutment element and the step shaped element are movable with respect to each other between at least a first position wherein the abutment element is under spring force in abutment with the first higher step, a transition position wherein the abutment element is under spring force in abutment with the transition surface and a second position wherein the abutment element is located opposite the second lower step; at least one operating element connected to the abutment element by means of a connector, wherein the operating element is being moved from a first operating position when the abutment element is the first position to a second operating position by means of the abutment element when the abutment element is being moved to the second position and vice versa.

## Description

### FIELD OF THE INVENTION

The invention relates to a child vehicle seat comprising a seat portion and a backrest portion.

### BACKGROUND OF THE INVENTION

Such a child vehicle seat is known from US9126509B2. Such kind of child vehicle seats must be able to be adapted to different types of restraint.

The first type of restraint is a harness with shoulder straps integral with the child vehicle seat for the smallest children (group 0/1 from 40 cm-105 cm). In this case, the belt of the vehicle can be used to maintain the child vehicle seat on the seat of the vehicle, unless the latter is maintained by dedicated means, such as Isofix^{®} clamps.

The second type of restraint, approximately starting at the age of 3 years, with a child having a length of more than too cm and approximately having a weight of the child greater than or equal to 15 kg, is the three-point seat belt of the vehicle to maintain the child (group 2/3, longer than 100 cm) in the child vehicle seat.

It is sometimes difficult to not be mistaken, or at least to not hesitate, in the fastening of the child vehicle seat to the vehicle, as there are multiple belt passage points of the vehicle to be used or not to be used according to the use in group 0/1 or in group 2/3 of the child restraint.

In particular, the vehicle belt must not be used to maintain the child in group 0/1, whether to replace the harness or as a complement to the latter. Inversely, in group 2/3, the child must be maintained by the vehicle belt, not by the harness in the child vehicle seat.

To attempt to limit this risk, regulatory indicators have been provided, placed at the suitable locations for each of the two groups. However, this is a system for aid, or for assistance, which is solely informative, which does not make it possible to prevent misuse.

There are other features of a child vehicle seat which might or might not be used under specific conditions like, whereby the user can easily make a mistake which feature must or must not be used according to the age and size of the child. Such features are for example the use of a support leg for group 0/1 but not for group 2/3, different head rest positions, the possibility to recline the seat or not.

### SUMMARY OF THE INVENTION

At least one of the objects of the invention is to provide means which can easily be operated and can be used to prevent a user from making a mistake in the method for restraining the child according to his age and his morphology or the method to use other features of the child vehicle seat.

This object is accomplished with the child vehicle seat according to the invention in that the child vehicle seat comprises
- at least one step shaped element provided with at least a first higher step, a second lower step as well as a transition surface located between the first higher step and the second lower step,
- at least one abutment element cooperating with the step shaped element, wherein the abutment element and the step shaped element are movable with respect to each other between at least a first position wherein the abutment element is under spring force in abutment with the first higher step, a transition position wherein the abutment element is under spring force in abutment with the transition surface and a second position wherein the abutment element is located opposite the second lower step,
- at least one operating element connected to the abutment element by means of a connector, wherein the operating element is being moved from a first operating position when the abutment element is the first position to a second operating position by means of the abutment element when the abutment element is being moved to the second position and vice versa.

By moving the abutment element and the step shaped element with respect to each other, the operating element is being moved as well. The movement of the abutment element and the step shaped element is preferably related to a feature like adjusting the headrest, reclining the child vehicle seat, adjusting shoulder parts, arm rests, whereby at the same time the operating element is moved to a position to provide or block access to another feature like a belt guide, an indicator element moving from red to green, side parts of a headrest moving from narrow to wide, a shoulder rest moving from narrow to wide, a belt guide moving from invisible to visible, a recline function moving from possible to impossible (blocked). The different steps of the step shaped element define different positions of the abutment element and thus the operating element.

An embodiment of the child vehicle seat according to the invention is characterized in that the connector comprises a cable connected with a first end to the abutment element and with a second end to the operating element.

Due to the cable the abutment element and the operating element are easily connected to each other, whereby the abutment element and the operating element can each be positioned at any desired location on the child vehicle seat. Another advantage is that the cable the abutment element and the operating element can be moved in different directions extending at an angle with respect to each other.

Another embodiment of the child vehicle seat according to the invention is characterized in that the abutment element is under spring force of a first spring in abutment with the first higher step and the transition surface, whilst the operating element is movable against spring force of a second spring to the second operating position when the abutment element is the second position, whereby the spring force of the first spring is larger than the spring force of the second spring.

When using a cable or other kind of flexible connector, the first spring will always be able to push the abutment element under spring force in abutment with the first higher step and the transition surface of the step shaped element, independent of the operating position of the operating element.

Another embodiment of the child vehicle seat according to the invention is characterized in that the child vehicle seat is provided with at least one belt guide for a vehicle belt, which belt guide is provided with an opening for inserting a vehicle belt inside the belt guide, wherein in the first operating position the opening of the belt guide is closed by means of the operating element, whilst in the second operating position the operating element is removed from the opening so that the opening of the belt guide is opened.

The opening of the belt guide will be closed by the operating element when using the child vehicle seat for the smallest children (group 0/1) and will be opened when using the child vehicle seat for larger children (group 2/3). When the belt guide is open, the vehicle belt can be guided through the belt guide and be used to maintain the child in the child vehicle seat.

Another embodiment of the child vehicle seat according to the invention is characterized in that the child vehicle seat is provided with a headrest being movable with respect to the backrest portion from a first headrest position to a second headrest position, whereby the headrest is located closer to the seat portion in the first headrest position than in the second headrest position, whereby the backrest portion or the headrest comprises the at least one belt guide, the operating element is positioned on the backrest portion comprising the at least one belt guide or the headrest comprising the at least one belt guide, the abutment element is provided on the backrest portion and the step shaped element is provided on the headrest or the other way around, whereby when the headrest is in first headrest position, the abutment element is in the first position, the operating element is in the first operating position and the opening of the belt guide is closed, whilst when the headrest is in second headrest position, the abutment element is in the second position, the operating element is in the second operating position and the opening of the belt guide is opened.

The first headrest position will be used for the smallest children (group 0/1). In the first headrest position, the opening of the belt guide is closed, thereby preventing a user from inserting the vehicle belt into the belt guide. When moving the headrest from the first headrest position to the second headrest position, the opening of the belt guide will be opened, thereby providing access to the belt guide, so that the vehicle belt can be inserted and be used to maintain in a group 2/3 seat the child in the child vehicle seat.

The belt guide can be connected to the backrest portion or the movable headrest.

The operating element is located on the same part as the belt guide. So, if the belt guide is located on the headrest, the operating element is also located on the headrest. If the belt guide is located on the backrest portion, the operating element is also located on the backrest portion.

The abutment element is provided on the backrest portion and the step shaped element is provided on the headrest or the abutment element is provided on the headrest and the step shaped element is provided on the backrest portion.

It has to be noted that by the child vehicle seat as known from US9126509B2 the belt guide can also be locked. However, to lock the belt guide the user must perform additional actions to the movement of the headrest. By the child vehicle seat according to the invention the belt guide is automatically opened or closed by movement of the headrest.

Another embodiment of the child vehicle seat according to the invention is characterized in that the at least one belt guide, the abutment element and the operating element are positioned on the headrest, whilst the step shaped element is provided on the backrest portion.

In this manner the belt guide is always in the correct position with respect to the headrest. The operating element must be located close to the belt guide and will be located on the headrest as well.

Having the abutment element as well as the operating element located on the headrest ensures that the distance between the abutment element and the operating element connected to the abutment element by means of the connector will always be the same, independent of the position of the headrest with respect to the backrest portion. Such a connector can be relatively simple, for example a cable or a stiff element.

Another embodiment of the child vehicle seat according to the invention is characterized in that the child vehicle seat comprises two belt guides, one belt guide on each lateral side of the child vehicle seat.

Since a child vehicle seat can be positioned on the vehicle seat near the left or the right door, whereby the location of the vehicle belt differs, the child vehicle seat is preferably provided on both lateral sides with a belt guide.

Another embodiment of the child vehicle seat according to the invention is characterized in that the child vehicle seat is provided with two step shaped elements, two abutment elements and two operating elements, wherein each set of one step shaped element, one abutment element and one operating element cooperates with another one of the belt guides.

In this manner the opening of each belt guide is being opened or closed by means of an independent set of a step shaped element, an abutment element and an operating element. If one set fails a user can still see that the other belt guide is closed, using this as a warning that something is wrong.

Another embodiment of the child vehicle seat according to the invention is characterized in that the child vehicle seat is provided with one step shaped element, one abutment element and two operating elements cooperating with the one abutment element.

By having only one step shaped element and only one abutment element cooperating with two operating elements, for example to open and close two openings of two belt guides, both openings are always simultaneously opened or closed. Furthermore, there is a reduction in the number of components being used, thereby reducing the costs. The operating elements can, for example, be located on a left side and a right side of the child vehicle seat.

Another embodiment of the child vehicle seat according to the invention is characterized in that the abutment element comprises a pen being movable under spring force towards the step shaped element.

Such a pen being linear movable by means of a spring provides a simple abutment element, whereby due to the spring force the pen will always be forced in the direction of the step shaped element.

Another embodiment of the child vehicle seat according to the invention is characterized in that the abutment element is rotatable under spring force towards the step shaped element.

Such an abutment element being rotatable movable by means of a spring provides a simple abutment element, whereby due to the spring force the abutment element will always be forced in the direction of the step shaped element.

Another embodiment of the child vehicle seat according to the invention is characterized in that the abutment element is connected by means of several connectors to several operating elements.

By having the abutment element being connected by means of several connectors to several operating elements, several functions belonging to the several operating elements can be performed at the same time, whilst only one the abutment element cooperating with a step shaped element is needed.

### BRIEF DESCRIPTION OF THE DRAWINGS

The child vehicle seat according to the invention will further be explained with reference to the drawings, wherein,
figure 1 is a perspective view of a child vehicle seat according to the prior art, with a headrest in a first position,
figure 2 is a perspective view of the child vehicle seat as shown in figure 1, with the headrest in second position,
figure 3 is a schematic front view of a part of child vehicle seat according to the invention,
figures 4A-4C are a schematic front view, a detailed front view and a cross section of a first embodiment of the invention in the first position of the abutment element and the first operating position of the operating element,
figures 5A-5B are a detailed front view and a cross section of a first embodiment of the invention in the transition position of the abutment element,
figures 6A-6C are a schematic front view, a detailed front view and a cross section of a first embodiment of the invention in the second position of the abutment element and the second operating position of the operating element,
figures 7-9 are cross sections of a second, third and fourth embodiment of the invention in the transition position of the abutment element,

In the drawings, like reference numerals refer to like elements.

### DESCRIPTION OF PREFERRED EMBODIMENTS

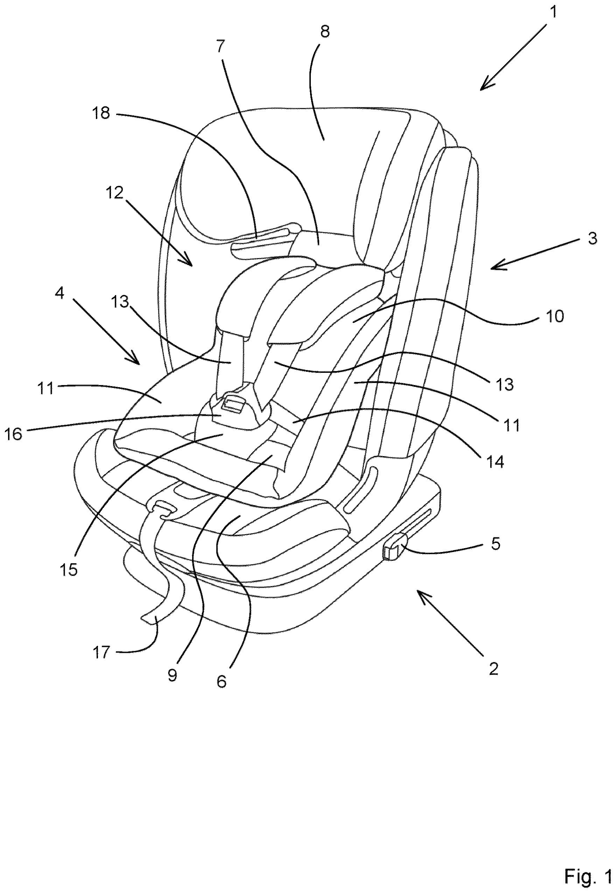

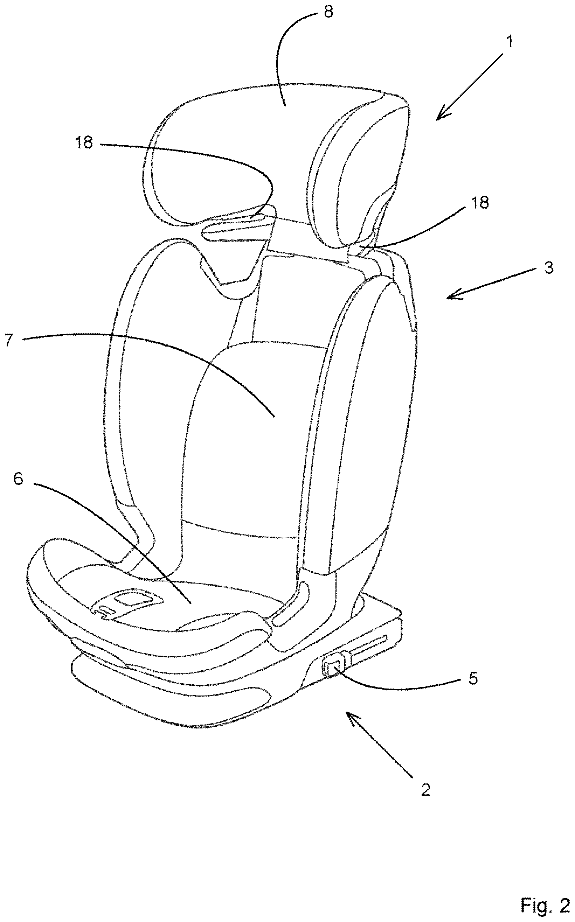

Figures 1 and 2 show perspective views of a child vehicle seat 1 according to the prior art. The child vehicle seat 1 comprises a base 2, a seat 3 and a removable inlay 4 for reducing the size of the seat 3.

The base 2 can be provided on both sides with ISOFIX-connectors being slidable in and out the base 2 by means of knobs 5. By means of the ISOFIX-connectors the child vehicle seat 1 can be connected in a manner known per se to a vehicle.

The seat 3 is provided with a seat portion 6, a backrest portion 7 and a movable headrest 8.

The inlay 4 is provided with an inlay seat portion 9, an inlay backrest portion 10 and side portions 11 extending between the inlay seat portion 9 and inlay backrest portion 10. As can be seen in figure 1, the inlay seat portion 9 rests on the seat portion 6 whilst the inlay backrest portion 10 rests against the backrest portion 7 of the seat 3. Due to the side portions 11 of the inlay 4 the width of the seat is reduced. When using the inlay 4, a harness 12 is connected to the seat 3 and the inlay 4, which harness 12 comprises two shoulder belts 13, two side belts 14 and one crotch belt 15 being detachably connected to each other by means of a buckle 16. The belts of the harness 12 can be tensioned by means of strap 17.

The child vehicle seat 1 described so far is known per se and will not be described in more detail.

In figure 1 the headrest 8 is in a first headrest position and will be used as a group 0/1 seat for small children.

In figure 2 the headrest 8 is being moved in the direction as indicated by arrow P1 to a second headrest position. Furthermore, no inlay portion 4 as shown in figure 1 is present so that the child vehicle seat can be used as a group 2/3 seat for larger children.

As can be seen in the figures 1 and 2, the headrest 8 is provided with belt guides 18 for guiding a shoulder portion of the vehicle belt (not shown). The belt guides 18 are always accessible, also when the child vehicle seat 1 is being used as a group 0/1 seat for small children. This has the risk that a user, like a parent or other adult, accidentally uses the vehicle belt instead of or in addition to the harness 12. This is undesirable and risky for the child.

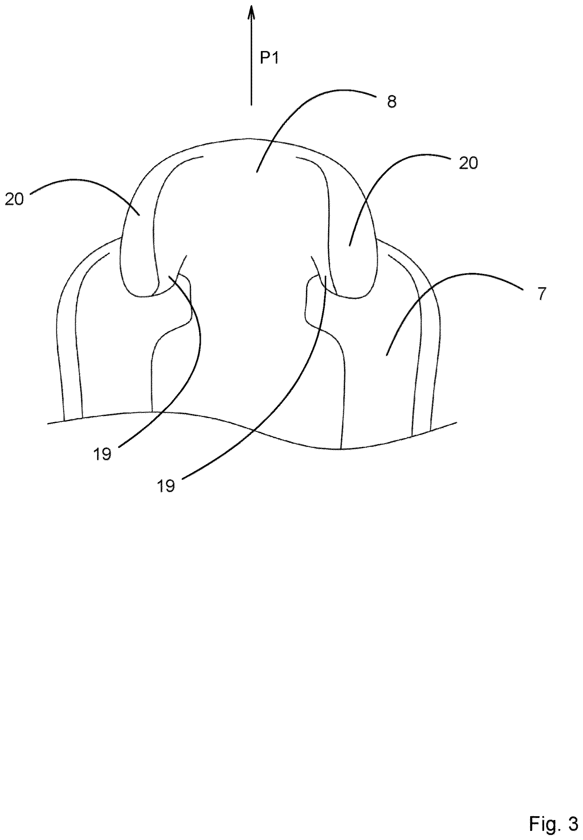

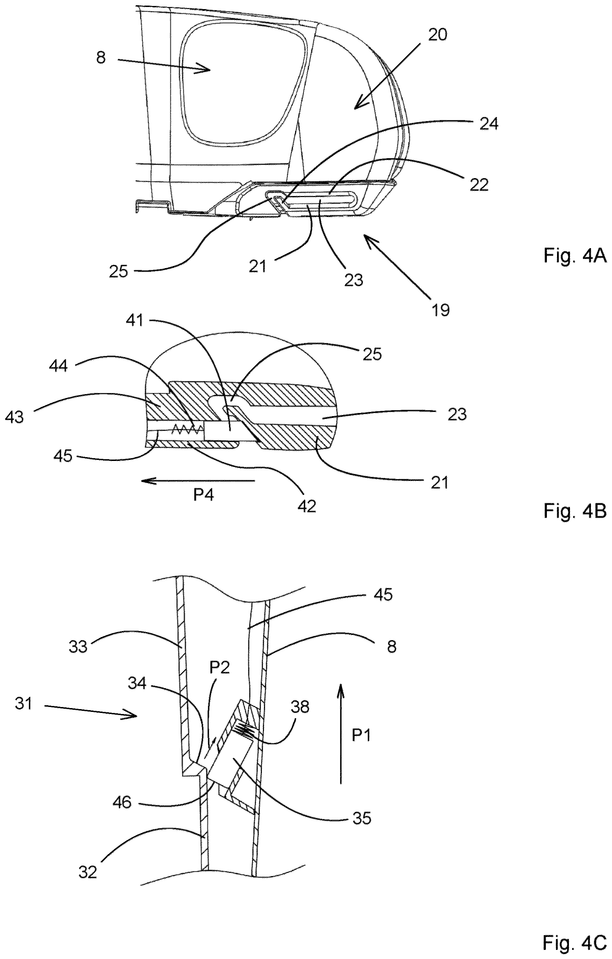

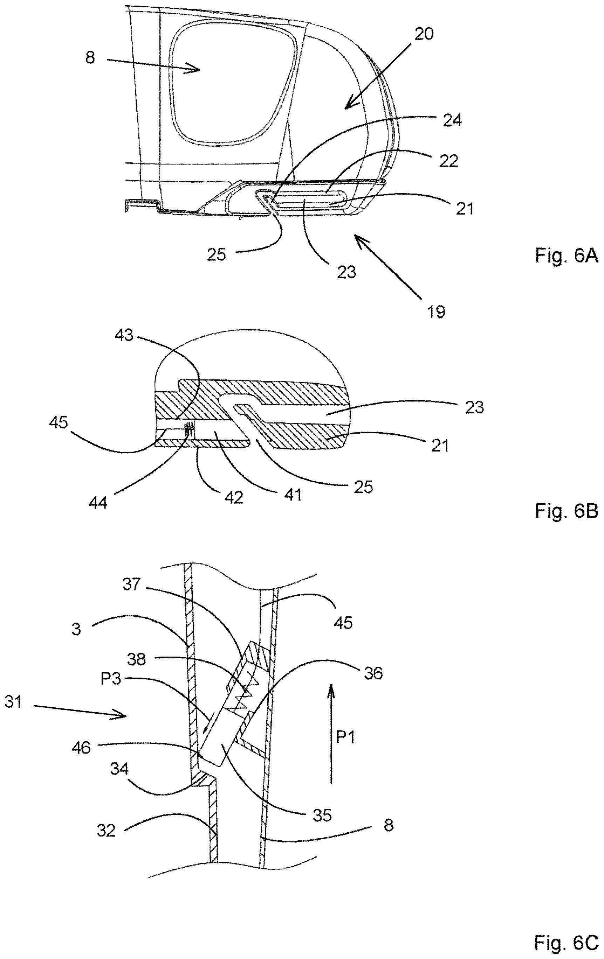

Figure 3 is a schematic front view of a part of child vehicle seat 1 according to the invention, showing a backrest portion 7 and a headrest 8 being movable in and opposite to the direction as indicated by arrow P1 from a first headrest position as shown in figure 3 to a second headrest position as shown in figure 2. The headrest 8 is located closer to the seat portion 6 in the first headrest position than in the second headrest position. The headrest 8 comprises two belt guides 19, one on each lateral side support 20 of the headrest 18. In figure 3 only the position of the belt guides 19 is indicated. In the figures 4A and 6A the belt guides 19 are shown in full detail.

Each belt guide 19 comprises two parts 21, 22 extending parallel at a distance of each other, thereby defining a space 23 to accommodate the vehicle belt. The part 21 is provided with a part 24 directed upwards and towards a centreline of the headrest 8. Around part 24 is a U-shaped opening 25 to be used for inserting the vehicle belt into the space 23 and preventing the vehicle belt to easily slide out of the space 23.

Figures 4A-6C are a schematic front view, a detailed front view and a cross section of a first embodiment of the invention in the different positions.

The child vehicle seat 1 according to the invention is similar to the child vehicle seat 1 as shown in the figures 1 and 2, except that the belt guides 19 differs from the belt guides 18. Furthermore, the child vehicle seat 1 according to the invention comprises two step shaped elements 31 each provided with a first higher step 32, a second lower step 33 as well as a transition surface 34 located between the first higher step 32 and the second lower step 33. The step shaped elements 31 extend substantially vertically and are provided on the backrest portion 7 below and behind the belt guides 19. The transition surface 34 is inclined. The first higher step 32 is located closer to the seat portion 6 and the headrest 8 than the second lower step 33.

The child vehicle seat 1 according to the invention also comprises two abutment elements 35 each located opposite the nearest step shaped element 31. It is also possible to use a single abutment element 35 and a single step shaped element 31.

The abutment element 35 is slidably located between two support parts 36, 37 being connected to the headrest 8. The abutment element 35 extends towards the seat portion 6. The abutment element 35 is slidable in directions as indicated by arrow P2, P₃ against respectively under spring force of spring 38.

The child vehicle seat 1 according to the invention also comprises two operating elements 41. Each operating element 41 is slidably located between two support parts 42, 43 being located opposite part 21 of the belt guide 13 and near opening 25. Each operating element 41 is slidable in and opposite to the direction as indicated by arrow P₄ against and under spring force of spring 44.

Each operating element 41 is connected to the corresponding or single abutment element 35 by means of a connector. The connector comprises a cable 45 connected with a first end to the abutment element 35 and with a second end to the operating element 41.

The operation of the child vehicle seat 1 according to the invention is as follows.

In the first position as shown in the figures 4A-4C, the headrest 8 is relatively close to the seat portion 6 and the abutment element 35 is under spring force of spring 38 in abutment with the first higher step 32. The first spring 38 is compressed. The spring force of the first spring 38 is larger than the spring force of the second spring 44. The second spring 44 is extended. The cable 45 has such a length that the operating element 41 has been moved under spring force of spring 44 against part 21 of the belt guide 19, thereby closing the opening 25. Since the opening 25 is closed a user cannot insert a shoulder portion of the vehicle belt into the belt guide 19.

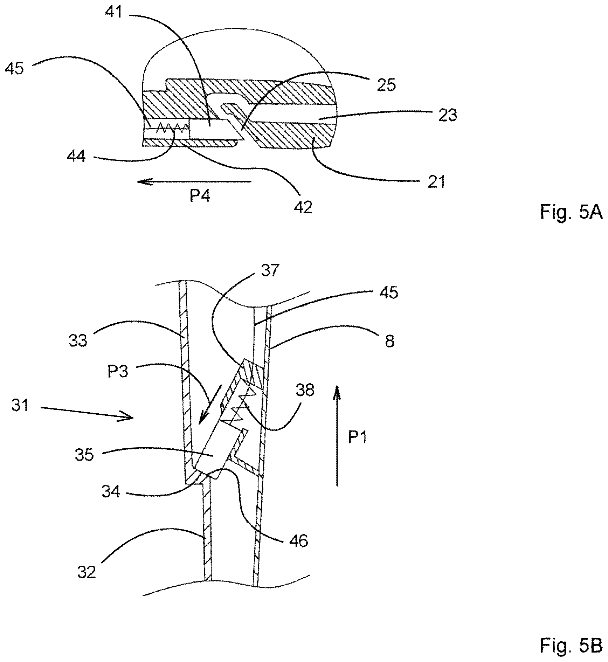

When the user pulls the headrest 8 upwards in the direction as indicated by arrow P1, an end 46 of the abutment element 35 slides along the first higher step 32 until the abutment element 35 reaches the transition surface 34. The end 46 of the abutment element 35 will then slide over the transition surface 34 into a transition position, whereby under the spring force of spring 38 the abutment element 35 will gradually slide in the direction as indicated by arrow P₃. The abutment element 35 will pull on the cable 45, thereby pulling the operating element 41 has been moved under spring force of spring 44 in the direction as indicated by arrow P₃, thereby gradually open the opening 25. See figures 5A-5B.

The headrest 8 can be positioned in a number of different headrest positions. The transition position is preferably located between a first set of different headrest positions and a second set of different headrest positions so that in a headrest position, the abutment element 35 always be in abutment with the first higher step 32 or the second lower step 34 so that the opening 25 is either fully closed or fully opened.

When the user pulls the headrest 8 further upwards in the direction as indicated by arrow P1, the end 46 of the abutment element 35 will slide along the second lower step 34, whereby the abutment element 35 is being moved to the second position. See figures 6A-6C. In the second position, the operating element 41 has been pulled against spring force of spring 44 completely between the parts 43, 43 into the second operating position so that the opening 25 is completely opened. In the second position of the abutment element 35, the headrest 8 is in the second headrest position so that the child vehicle seat can be used as a group 2/3 seat for larger children. In the second position of the abutment element 35, the first spring 38 is extended, whilst the second spring 44 is compressed. The child will be maintained in the child vehicle seat 1 by means of the vehicle belt, with the shoulder portion of the vehicle belt extending through the belt guide 19.

When the headrest 8 is being moved from the second headrest position (figures 6A-6C) towards the first headrest position (figures 4A-4C), the end 46 of the abutment element 35 will slide along the second lower step 34, and subsequently over the transition surface 34 and the first higher step 34, whereby the abutment element 35 will be pushed against spring force of the spring 38 towards the headrest 8. By doing so the end of the cable 45 connected to the abutment element 35 will also be moved towards the headrest 8 and will allow the end of the cable 45 connected to the operating element 41 as well as the operating element 41 to be moved under spring force of spring 44 in an opposite direction as indicated by arrow P₄ towards part 21 into the first operating position, thereby closing the opening 25.

In the first embodiment as shown in the figures 4A-6C, the abutment element 35 comprises a pen.

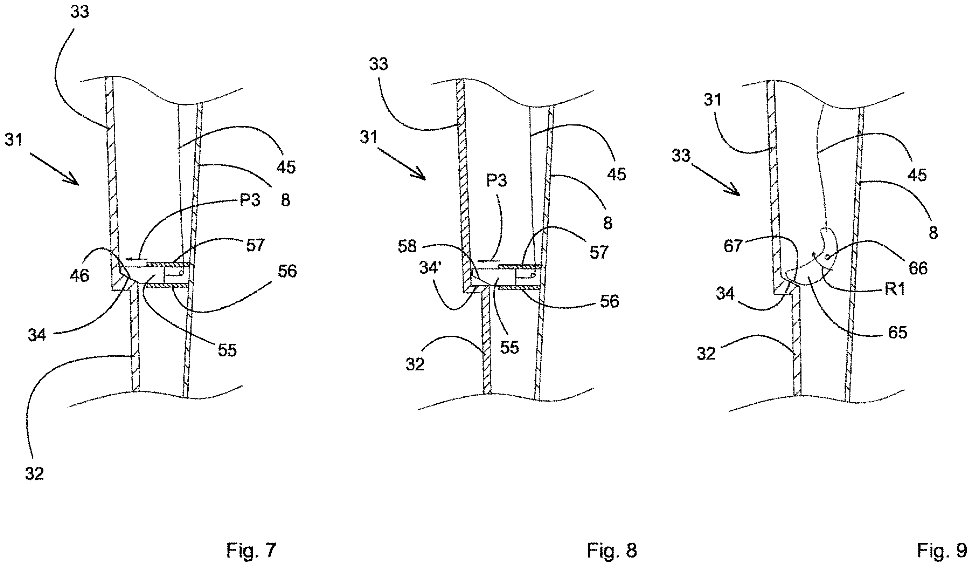

The figures 7-9 show cross sections of a second, third and fourth embodiment of the invention in the transition position of the abutment element. Only different embodiments of the step shaped element and abutment element are shown. The operating elements remain the same.

In figure 7, the abutment element 55 is slidably located between two support parts 56, 57 being connected to the headrest 8 and extends substantially horizontal towards the step shaped element 31. Between the headrest 8 and the abutment element 55 a spring (not shown) is located pushing the abutment element 55 towards to and in abutment with the step shaped element 31. The abutment element 55 is provided near an end with an inclined surface 58 corresponding with the inclination of the transition surface 34.

The third embodiment as shown in figure 8 differs from the second embodiment as shown in figure 7 in that the transition surface 34' extends substantially horizontal.

The fourth embodiment as shown in figure 9 differs from the second embodiment as shown in figure 7 in that the abutment element 65 is rotatable instead of translatable.

The abutment element 65 is pivotable about a pivot axis 66 mounted on the headrest 8. The abutment element 65 is pivotable about a pivot axis 66 under spring force of a spring (not shown) in a direction as indicated by arrow R₁, so that an end 67 of the abutment element 65 will always be in abutment with the step shaped element 31.

It is also possible that the abutment element 38 is located on the backrest portion 7 whilst the step shaped element 31 is located on the headrest 8. By such an embodiment the first higher step 32 needs to be located further away from the seat portion 6 than the second lower step.

It is also possible that the belt guide 19 is mounted on the backrest portion 7.

Preferably the belt guide 19, the operating element 41 for opening and closing the opening 25 of the belt guide 19 and the abutment element 35 are all located on the headrest 8 or the backrest portion 7 so that the distance between the operating element 41 and the abutment element 35 is constant and the length of the cable 45 can be constant as well. If the belt guide 19 and the operating element 41 are located on the headrest 8 and the abutment element 35 is located on the backrest portion 7 or the other way around, additional measurements must be taken for adjusting the length of the cable 45 so that in the first respectively second position of the abutment element 35, the operating element 41 will be in the first respectively second operating position.

It is also possible that the child vehicle seat is provided with one step shaped element, one abutment element and two operating elements cooperating with the one abutment element. In such a case the abutment element might be connected to the two operating elements by means of two cables, each cable connected with one end to the abutment element and connected with another end to one of the operating elements.

It is also possible that the abutment element is connected by means of several connectors to several operating elements, whereby not only the belt guide will be opened or closed but also other functions can be performed like warning signals, operating/blocking harness parts, preventing/allowing recline positions, Indicators that move from a first position to a second position, indicating a yes/no, red/green, safe/unsafe situation.

Next to a belt guide for the shoulder portion of the vehicle belt, child vehicle seats also have belt guides for the lap portion of the vehicle belt. These belt guides could also have positions (open/close, red/green, ...) that can be linked to a first headrest position and a second headrest position. The operating elements can also be used for adjusting the width of the headrest side wings from one narrower position to a second wider position.

It is also possible that the abutment element does not abut against the second lower step but is only prevented from moving too far away from the parts 36, 37. In such a case the transition surface 34 must be large enough to be able to receive the abutment element 34 when the headrest 8 is moved downwards to the first headrest position 8. In such an embodiment the second lower step is a virtual step.

It is also possible that the connector is not a flexible cable but a rigid element.

It is also possible that the operating element 41 that closes the belt guide, is a rotating element instead of a translation pin. In figure 9, a pivotable abutment element 65 is shown, a similar rotating element could be used to open/close the belt guide.

### LIST OF REFERENCE SIGNS

- 1: child vehicle seat
- 2: base
- 3: seat
- 4: removable inlay
- 5: knob
- 6: seat portion
- 7: backrest portion
- 8: headrest
- 9: inlay seat portion
- 10: backrest portion
- 11: side portion
- 12: harness
- 13: shoulder belt
- 14: side belt
- 15: crotch belt
- 16: buckle
- 17: strap
- 18: belt guide
- 19: belt guide
- 20: side support
- 21: part
- 22: part
- 23: space
- 24.: part
- 25: opening
- 31: step shaped element
- 32: first higher step
- 33: second lower step
- 34: transition surface
- 35: abutment element
- 36: support part
- 37: support part
- 38: spring
- 41: operating element
- 42: support part
- 43: support part
- 44: spring
- 45: cable
- 46: end
- 55: abutment element
- 56: support part
- 57: support part
- 58: surface
- 65: abutment element
- 66: pivot axis
- 67: end
- P1: arrow
- P2: arrow
- P₃: arrow
- R1: arrow

## Claims

1. A child vehicle seat comprising a seat portion and a backrest portion, **characterized in that** the child vehicle seat comprises
- at least one step shaped element provided with at least a first higher step, a second lower step as well as a transition surface located between the first higher step and the second lower step,
- at least one abutment element cooperating with the step shaped element, wherein the abutment element and the step shaped element are movable with respect to each other between at least a first position wherein the abutment element is under spring force in abutment with the first higher step, a transition position wherein the abutment element is under spring force in abutment with the transition surface and a second position wherein the abutment element is located opposite the second lower step,
- at least one operating element connected to the abutment element by means of a connector, wherein the operating element is being moved from a first operating position when the abutment element is the first position to a second operating position by means of the abutment element when the abutment element is being moved to the second position and vice versa.

2. A child vehicle seat according to claim 1, **characterized in that** the connector comprises a cable connected with a first end to the abutment element and with a second end to the operating element.

3. A child vehicle seat according to claim 1 or 2, **characterized in that** the abutment element is under spring force of a first spring in abutment with the first higher step and the transition surface, whilst the operating element is movable against spring force of a second spring to the second operating position when the abutment element is the second position, whereby the spring force of the first spring is larger than the spring force of the second spring.

4. A child vehicle seat according to claim 1, 2 or 3, **characterized in that** the child vehicle seat is provided with at least one belt guide for a vehicle belt, which belt guide is provided with an opening for inserting a vehicle belt inside the belt guide, wherein in the first operating position the opening of the belt guide is closed by means of the operating element, whilst in the second operating position the operating element is removed from the opening so that the opening of the belt guide is opened.

5. A child vehicle seat according to claim 4, **characterized in that** the child vehicle seat is provided with a headrest being movable with respect to the backrest portion from a first headrest position to a second headrest position, whereby the headrest is located closer to the seat portion in the first headrest position than in the second headrest position, whereby the backrest portion or the headrest comprises the at least one belt guide, the operating element is positioned on the backrest portion comprising the at least one belt guide or the headrest comprising the at least one belt guide, the abutment element is provided on the backrest portion and the step shaped element is provided on the headrest or the other way around, whereby when the headrest is in first headrest position, the abutment element is in the first position, the operating element is in the first operating position and the opening of the belt guide is closed, whilst when the headrest is in second headrest position, the abutment element is in the second position, the operating element is in the second operating position and the opening of the belt guide is opened.

6. A child vehicle seat according to claim 5, **characterized in that** the at least one belt guide, the abutment element and the operating element are positioned on the headrest, whilst the step shaped element is provided on the backrest portion.

7. A child vehicle seat according to claim 4, 5 or 6, **characterized in that** the child vehicle seat comprises two belt guides, one belt guide on each lateral side of the child vehicle seat.

8. A child vehicle seat according to claim 4, 5, 6 or 7, **characterized in that** the child vehicle seat is provided with two step shaped elements, two abutment elements and two operating elements, wherein each set of one step shaped element, one abutment element and one operating element cooperates with another one of the belt guides.

9. A child vehicle seat according to one of the preceding claims, **characterized in that** the child vehicle seat is provided with one step shaped element, one abutment element and two operating elements cooperating with the one abutment element.

10. A child vehicle seat according to one of the preceding claims, **characterized in that** the abutment element comprises a pen being movable under spring force towards the step shaped element.

11. A child vehicle seat according to one of the preceding claims, **characterized in that** the abutment element is rotatable under spring force towards the step shaped element.

12. A child vehicle seat according to one of the preceding claims, **characterized in that** the abutment element is connected by means of several connectors to several operating elements.
